(19) **Europäisches Patentamt / European Patent Office / Office européen des brevets**

(11) **EP 2 791 652 B1**

(12) # EUROPÄISCHE PATENTSCHRIFT

(45) Veröffentlichungstag und Bekanntmachung des Hinweises auf die Patenterteilung:
**16.02.2022 Patentblatt 2022/07**

(21) Anmeldenummer: **12799213.9**

(22) Anmeldetag: **13.12.2012**

(51) Internationale Patentklassifikation (IPC):
***G01N 21/39*** *(2006.01)*

(52) Gemeinsame Patentklassifikation (CPC):
**G01N 21/39; G01N 21/8507;** G01N 2021/0392;
G01N 2021/151; G01N 2021/399; G01N 2021/8514

(86) Internationale Anmeldenummer:
**PCT/EP2012/075352**

(87) Internationale Veröffentlichungsnummer:
**WO 2013/087753 (20.06.2013 Gazette 2013/25)**

(54) **GASMESSGERÄT**

GAS MEASURING DEVICE

APPAREIL DE MESURE POUR UN GAZ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.12.2011 EP 11193681**

(43) Veröffentlichungstag der Anmeldung:
**22.10.2014 Patentblatt 2014/43**

(73) Patentinhaber: **Mettler-Toledo GmbH
8606 Greifensee (CH)**

(72) Erfinder: **KILLICH, Frank
34596 Bad Zwesten (DE)**

(74) Vertreter: **Mettler-Toledo
IP Department
Im Langacher 44
8606 Greifensee (CH)**

(56) Entgegenhaltungen:
**EP-A1- 0 068 037      EP-A1- 2 065 738
DE-A1- 4 443 016      GB-A- 1 303 412
US-A- 3 805 074      US-A- 4 549 080
US-A- 5 331 409      US-A- 5 963 336
US-A- 6 064 488      US-A1- 2003 002 547**

## Beschreibung

Die Erfindung betrifft ein Gasmessgerät mit einem ersten Prozessfenster zur absorptions-spektroskopischen in-situ Bestimmung mindestens eines chemischen und/oder physikalischen Parameters eines gasförmigen Messmediums.

Die Laser-Absorptions-Spektroskopie und insbesondere die sogenannte Diodenlaser-Absorptions-Spektroskopie mittels durchstimmbarem Laser, auch als TDLAS (tunable diode laser absorption spectroscopy) bezeichnet, eignet sich besonders gut für die Bestimmung mindestens eines chemischen und/oder physikalischen Parameters eines gasförmigen Messmediums.

Mittels der Laser-Absorptions-Spektroskopie kann die Konzentration oder der Gehalt eines Gases, welches in einer Messumgebung oder einem Messmedium vorhanden ist, sehr genau bestimmt werden. Weiterhin können auch weitere Parameter wie beispielsweise Temperatur oder Druck bestimmt werden.

Im Falle der TDLAS wird das Messmedium mit der Strahlung eines durchstimmbaren Lasers durchstrahlt. Die Wellenlänge der Strahlung wird dabei in einem vorgegebenen Wellenlängenbereich periodisch moduliert, wobei der vom Laser durchlaufene Wellenlängenbereich vorzugsweise eine oder mehrere Absorptionsbanden des zu untersuchenden Gases umfasst. Der abgedeckte Wellenlängenbereich wird durch den verwendeten Laser, genauer den verwendeten Diodenlaser, bestimmt. Es ist eine Vielzahl von Lasern und Diodenlasern bekannt. Sogenannte DFB-Laser (distributed feedback laser) können Wellenlängenbereiche zwischen etwa 700 nm und etwa 3 $\mu$m abdecken. Sogenannte VCSEL-Laser (vertical-cavity surface-emitting laser) können Wellenlängenbereiche bis etwa 2.1 $\mu$m und QCL-Laser (quantum cascade laser) Wellenlängenbereiche oberhalb von etwa 3.5 $\mu$m oder sogar oberhalb von etwa 4.3 $\mu$m abdecken.

Gemessen wird meist in einer Transmissions-Anordnung, wobei auch Messungen in Transflexions-Anordnung bekannt sind. Die vom Laser oder Diodenlaser ausgesandte Strahlung wird durch das Messmedium gelenkt und nach Interaktion mit demselben von einem geeigneten Detektor detektiert.

Detektiert werden können Gase, welche mindestens eine charakteristische Absorptionsbande oder Absorptionslinie in dem verwendeten Wellenlängenbereich aufweisen. Gase welche mittels Laser-Absorptions-Spektroskopie detektiert werden können, umfassen unter anderem Sauerstoff ($O_2$), Kohlendioxid ($CO_2$), Kohlenmonoxid (CO), Stickoxide ($NO_x$), Amine, Ammoniak ($NH_3$), Schwefelwasserstoffe ($H_2S$), Schwefeloxide ($SO_2$), Halogenwasserstoffverbindungen, wie HCl oder HF, gasförmiges Wasser oder sogar Mischungen daraus.

Für die Bestimmung von beispielsweise Sauerstoff eignet sich insbesondere ein Laser, welcher beispielsweise im Bereich von 760 nm emittiert oder moduliert werden kann, und für die Bestimmung von $NH_3$ ein Laser, welcher im Bereich um 1500 nm emittiert oder moduliert werden kann, da in diesen Bereichen jeweils eine starke Absorptionsbande von Sauerstoff oder $NH_3$ liegt.

Die Begriffe " Messumgebung" und " Messmedium" bezeichnen hier die Umgebung bzw. das Medium in welchem gemessen wird bzw. welches analysiert wird.

Die US 5,331,409 A offenbart ein Gasmessgerät mit einem durchstimmbaren Diodenlaser und einer angeschlossenen Gasmessanordnung, in die das zu untersuchende Messmedium eingeleitet wird und welche mehrere Gasmesszellen umfasst. Die Strahlung wird durch eine Kollimator-Linse in eine erste Messzelle gelenkt, die einen Beamsplitter aufweist, welcher die Strahlung durch jeweils eine Fokussierlinse in eine weitere Messzelle oder eine Referenzzelle lenkt. Die Messzelle und die Referenzzelle weisen jeweils einen Detektor auf. Der Einsatz dieser Linsen führt jedoch zum Auftreten von Interferenzen, welche die Detektion der Absorptionsbanden stören. Um diesen Effekt möglichst zu unterdrücken, wurden die Messzellen hier besonders lang ausgestaltet.

Beim Einsatz eines Gasmessgeräts in einer Prozessumgebung und insbesondere in einem Behältnis wird die Laserstrahlung typischerweise durch ein Prozessfenster in das Messmedium oder die Messumgebung eingekoppelt. Das Prozessfenster kann wie in der US 5,331,409 A offenbart eine Linse sein. Weiterhin sind Gasmessgeräte bekannt, welche Keilfenster oder normale Fenster als Prozessfenster aufweisen. Die Keilfenster werden häufig leicht schräg zur optischen Achse eingebaut. Normale Fenster werden meist unter dem Brewsterwinkel, also ebenfalls schräg zur optischen Achse, eingebaut. Bereits der Einbau der Prozessfenster unter dem Brewsterwinkel kann je nach Ausrichtung der Laserpolarisation zu Signalverlusten führen, was selbst durch eine möglichst genaue Justierung nicht immer vollständig unterdrückt werden kann. Nachteilig an diesen Lösungen ist zudem, dass häufig ein Fensterpaar eingebaut werden muss, um den Strahlengang ausreichend zu korrigieren und zudem, dass die Prozessfenster insbesondere mit einer Antireflex-Beschichtung beschichtet werden müssen, um sonst auftretende Interferenzeffekte zu unterdrücken. Interferenzeffekte können die Messergebnisse negativ beeinflussen und zudem zu einer temperaturabhängigen Drift führen. Hinzu kommt, dass der präzise Einbau solcher Fenster aufgrund der notwendigen Justierung zeitintensiv und die Herstellung hochpräziser Keilfenster kostspielig ist. Der Einbau eines planparallelen optischen Fensters schräg zur optischen Achse ist in US 5,963,336 A offenbart. Durch die Schrägstellung des Fensters soll insbesondere erreicht werden, dass ein Teil der eingestrahlten Laserstrahlung als Referenzstrahl unter einem bestimmten Winkel zu einem Detektor zurückgestrahlt wird, der daraus ein Referenzsignal bildet. EP 0 068 037 A1 offenbart die Anordnung einer afokalen Meniskuslinse als Strahlteiler im Abbildungsstrahlengang einer Bildaufzeichnungsvorrichtung, um einen von der Polarisationsrichtung unabhängigen Teilstrahl zur Regelung der Intensität des auf das Aufzeichnungsmedium auftreffenden Lichtstrahls auszublenden.

Beim Einsatz von Gasmessgeräten in Prozessanlagen oder Messumgebungen, vor allem in solchen, in denen raue Bedingungen herrschen, ist der Einsatz beschichteter optischer Elemente nachteilig, da unter Umständen die Beschichtung angegriffen und beschädigt oder zerstört werden kann, was wiederum zu einem Verlust an Messgenauigkeit führt. Unter rauen Bedingungen werden hier Messumgebungen mit beispielsweise relativ hohen oder niedrigen Temperaturen, relativ hohen oder niedrigen Drücken, und/oder solche, in welchen aggressive Chemikalien eingesetzt werden, verstanden. Gerade beim Einsatz in Prozessanlagen oder in der Atmosphären-Forschung ist es zudem sehr schwierig, die ausreichende Justierung der Prozessfenster während des gesamten Messzyklus und/oder der Lebenszeit des Gasmessgeräts zu gewährleisten, da dieses nur nach Ausbau des Gasmessgeräts nachjustiert werden kann.

Absorptions-spektroskopische Gasmessgeräte können beispielweise zur in-situ Überwachung von Gaskonzentrationen, insbesondere von Sauerstoff, in potentiell explosionsgefährdeten Prozessen bzw. Prozessanlagen, wie beispielsweise in der Ölraffinerie oder bei Verbrennungsprozessen, eingesetzt werden. Ein weiteres Anwendungsgebiet stellt die Atmosphären-Forschung da.

Zur Kontrolle und/oder Analyse derartiger Prozesse und Messumgebungen ist es besonders wichtig, dass die eingesetzten Gasmessgeräte mit hoher Verlässlichkeit, möglichst wartungsfrei Messwerte mit einer hohen Reproduzierbarkeit liefern.

Daher besteht die Aufgabe dieser Erfindung darin, ein absorptions-spektroskopisches Gasmessgerät mit einem Prozessfenster für die in-situ Bestimmung bereitzustellen, welches besonders robust ist und auch unter rauen Prozessbedingungen möglichst ohne Verlust der Messgenauigkeit und Reproduzierbarkeit eingesetzt werden kann.

Gelöst wird diese Aufgabe durch ein Gasmessgerät zur absorptions-spektroskopischen in-situ Bestimmung mindestens eines chemischen und/oder physikalischen Parameters eines gasförmigen Messmediums. Das Gasmessgerät umfasst ein erstes Gehäuse, mindestens einen Laser als Strahlungsquelle, mindestens ein erstes Prozessfenster zur Einkopplung der vom Laser ausgesandten Strahlung in das gasförmige Messmedium und mindestens einen Detektor, mit welchem die Strahlung nach Wechselwirkung mit dem Messmedium detektiert wird. Erfindungsgemäss ist das erste Prozessfenster als afokale Meniskuslinse ausgestaltet, welche eine konvexe Oberfläche und eine konkave Oberfläche aufweist.

Der Einsatz einer afokalen Meniskuslinse ist besonders vorteilhaft, da aufgrund der fehlenden abbildenden Eigenschaften dieser afokalen Meniskuslinse eine besondere Ausrichtung oder Justierung der afokalen Meniskuslinse zum Messstrahl unnötig ist, da eine afokale Meniskuslinse keine abbildenden Eigenschaften aufweist.

Meniskuslinsen können sowohl fokal, also abbildend bzw. als Streu- und/oder Sammellinse, oder afokal, also nicht-abbildend, ausgebildet sein. Im Gegensatz zu einer fokalen Meniskuslinse mit endlicher Brennweite weist eine afokale Meniskuslinse eine im Wesentlichen unendliche Brennweite auf.

Wird eine fokale Meniskuslinse als erstes Prozessfenster eingesetzt, so sollte deren Geometrie, insbesondere die Krümmungsradien, Brechzahl und Linsenmittendicke, für jedes Gasmessgerät berechnet und somit möglichst exakt auf die Länge der Messstrecke und/oder weitere eingesetzte Komponenten, wie beispielsweise Laser, Detektor und/oder optisches Umlenkelement abgestimmt werden. Zur Gewährleistung reproduzierbarer Messergebnisse sollte die Messstrecke bei Verwendung fokaler Meniskuslinsen als erstes und/oder zweites Prozessfenster eine im Wesentlichen feste Länge aufweisen. Zudem ist auf Grund der abbildenden Eigenschaften einer fokalen Meniskuslinse als Prozessfenster ihre Anordnung in Bezug auf die Ausrichtung ihrer konkaven und konvexen Oberfläche im Wesentlichen vorgegeben.

Erfindungsgemäss ist das erste Prozessfenster des Gasmessgeräts als afokale Meniskuslinse ausgestaltet. Die Verwendung einer afokalen Meniskuslinse als erstes Prozessfenster ist vorteilhaft, da diese unabhängig von der Länge der Messstrecke eingesetzt werden kann, was eine hohe Unempfindlichkeit in Bezug auf die Justierung bedingt und das Gasmessgerät sehr robust macht. Zudem ermöglicht es eine afokale Meniskuslinse aufgrund ihrer optischen Eigenschaften, die Laserstrahlung so in das Messmedium oder die Messumgebung ein- und/oder auszukoppeln, dass die Bildung störender Interferenzen am Detektor weitestgehend vermieden wird.

Ein weiterer Vorteil der Verwendung afokaler Meniskuslinsen als Prozessfenster liegt darin, dass afokale Meniskuslinsen wie Planplatten in beliebiger Orientierung im Gasmessgerät angeordnet werden können. Eine afokale Meniskuslinse kann mit der konkaven oder konvexen Oberfläche zum Messmedium ausgerichtet werden, ohne dass sich die optischen Eigenschaften des Gasmessgeräts ändern.

Aufgrund der optischen Eigenschaften der afokalen Meniskuslinse, kann ein Gasmessgerät zudem mit einem unbeschichteten Prozessfenster, welches insbesondere keine Anti-Reflektions-Beschichtung aufweist, realisiert werden. Dieses ist gerade beim Einsatz von Gasmessgeräten in Prozessanlangen zur in-situ Bestimmung vorteilhaft, da so optische Fehler und Interferenzen aufgrund des Prozessfensters weitestgehend vermieden werden können. Die Messstabilität und Reproduzierbarkeit der Messergebnisse können langfristig gewährleistet und die Nachweisgrenze kann verbessert werden. Ein als afokale Meniskuslinse ausgestaltetes erstes Prozessfenster kann zudem mit verschiedenen bekannten Lasern oder Diodenlasern, welche Strahlung einer festen Wellenlänge emittieren oder durchstimmbar sind, in erfindungsgemässen Gasmessgeräten eingesetzt werden, solange das erste Prozessfenster für die eingesetzte Strahlung optisch durchlässig ist.

Geeignete Materialien für das Prozessfenster sind beispielsweise Borosilikat Gläser, Quarz, Quarzgläser, Saphir, Diamant, Zinkselenid oder Germanium. Selbstverständlich kann ein erfindungsgemässes Prozessfenster auch aus einem anderen für optische Linsen bekannten Material, insbesondere aus einem optischen Glas, gefertigt werden.

Als Detektor eignen sich je nach Wellenlängenbereich des eingesetzten Lasers verschiedene in der Laser-Absorptions-Spektroskopie bekannte Detektoren, wie beispielsweise Photodioden, Photomultiplier, Photozellen, InGaAs-Detektoren oder pyroelektrische Detektoren, wobei auch andere bekannte Strahlungsdetektoren eingesetzt werden können.

Ein erfindungsgemässes absorptions-spektroskopisches Gasmessgerät kann beispielsweise zur Untersuchung eines gasförmigen Messmediums in einer beliebigen Messumgebung verwendet werden. Beim Einsatz in einer Prozessanlage wird das Gasmessgerät vorzugsweise zur Bestimmung eines Parameters in einem Behältnis eingesetzt, wobei hier als "Behältnis" verschieden Bauteile einer Prozessanlage, wie insbesondere Reaktionsbehälter sowie auch alle Arten von Zu- oder Ableitungen verstanden werden, in welchen absorptions-spektroskopische Untersuchungen durchgeführt werden können. Weiterhin fallen darunter auch andere Behältnisse in denen gasförmige Messmedien, Gase oder Gasmischungen gelagert, transportiert oder verwendet werden können.

In einem Ausführungsbeispiel kann das Gasmessgerät ferner ein optisches Umlenkelement umfassen, welches die durch das erste Prozessfenster ins Messmedium eingekoppelte Strahlung wieder zum ersten Prozessfenster zurücklenkt, so dass die Strahlung wieder aus dem Messmedium ausgekoppelt werden kann.

Das optische Umlenkelement kann beispielsweise mindestens eines der folgenden optischen Elemente umfassen: eine Katzenaugenoptik, ein Tripelprisma, einen Tripelspiegel, einen planarer Spiegel und/oder einen abbildender Spiegel.

In einem weiteren Ausführungsbeispiel des Gasmessgeräts können der Detektor und der Laser im ersten Gehäuse angeordnet sein. Das erste Prozessfenster dient in dieser Anordnung zum Einkoppeln der vom Laser ausgesandten Strahlung in das Messmedium sowie nach Wechselwirkung mit dem Messmedium auch zum Auskoppeln der Strahlung aus dem Messmedium.

In einem weiteren Ausführungsbeispiel kann das Gasmessgerät ein zweites Gehäuse und ein zweites Prozessfenster aufweisen, wobei der Detektor oder das Umlenkelement im zweiten Gehäuse angeordnet sind.

Zwischen dem ersten Prozessfenster und dem Umlenkelement oder dem zweiten Prozessfenster bildet sich im Betrieb eine Messstrecke aus, welche zur absorptionsspektroskopischen Detektion mindestens eines chemischen und/oder physikalischen Parameters dient. Bei Verwendung eines Umlenkelements durchläuft die vom Laser ausgesandte Strahlung die Messstrecke zweimal auf dem Weg vom Laser zum Detektor.

In einem weiteren Ausführungsbeispiel kann das optische Umlenkelement im zweiten Gehäuse angeordnet sein, so dass durch das erste Prozessfenster in das Messmedium eingekoppelte Strahlung zunächst durch das zweite Prozessfenster aus dem Messmedium ausgekoppelt und auf das optische Umlenkelement gelenkt wird. Die Strahlung wird vom optischen Umlenkelement umgelenkt und wieder durch das erste und zweite Prozessfenster und das Messmedium zum Detektor zurück gelenkt, welcher in dieser Anordnung im ersten Gehäuse angeordnet ist. Durch die doppelte Transmission der Strahlung durch das Messmedium kann die Nachweisgrenze der Absorptionsmessung erhöht werden, da gemäss des Lambert-Beerschen-Gesetzes die Länge der Messstrecke direkt proportional zur Absorptionsintensität ist.

Die Anordnung von Laser, Detektor und/oder Umlenkelement in zwei Gehäusen ist vor allem für den Einsatz in einer sogenannten Cross-Stack-Anordnung oder einer Open-Path-Anordnung geeignet. Bei einer Cross-Stack-Anordnung befindet sich das Messmedium in einem geschlossenen oder offenen Behältnis, das durchstrahlt wird, beispielsweise einer Rohrleitung. Eine Open-Path-Anordnung wird vor allem für sehr lange Messstrecken verwendet, beispielsweise in der Atmosphären-Forschung oder der Umwelt-Forschung, insbesondere für die Luft-Analyse. Für eine Cross-Stack- oder Open-Path-Anordnung kann entweder im ersten Gehäuse der Laser und im zweiten Gehäuse der Detektor oder im ersten Gehäuse Laser und Detektor und im zweiten Gehäuse das Umlenkelement angeordnet sein.

Vorzugsweise ist auch das zweite Prozessfenster als vorzugsweise afokale Meniskuslinse ausgebildet, welche eine konvexe und eine konkave Oberfläche aufweist. Die Verwendung von zwei Meniskuslinsen als erstes und zweites Prozessfenster ist vorteilhaft, da so beide Prozessfenster ohne Beschichtung eingesetzt werden können. Auf Grund der optischen Eigenschaften afokaler Meniskuslinsen, können die afokalen Meniskuslinsen bei einem Gasmessgerät mit zwei als afokale Meniskuslinse ausgestalteten Prozessfenstern gleich oder unterschiedlich zum Messmedium orientiert sein. In jeder Anordnung bleibt das Gasmessgerät robust gegenüber geometrischen Störungen und ist zudem im Wesentlichen längenunabhängig in Bezug auf die Messstrecke. Weiterhin kann auch eine afokale Meniskuslinse zusammen mit einer fokalen Meniskuslinse eingesetzt werden.

Die Dicke der afokalen Meniskuslinse kann je nach Einsatzbedingungen angepasst werden, insbesondere kann über die Dicke der afokalen Meniskuslinse die Druckbeständigkeit derselben in einem gewissen Bereich angepasst werden. Je dicker die afokale Meniskuslinse, desto druckbeständiger ist das derartig ausgestaltete Prozessfenster und des zugehörigen Gassmessgeräts.

Berechnet werden können geeignete afokale Meniskuslinsen mittels den folgenden Formeln zur Berechnung der Linsendicke, genauer der Linsenmittendicke, und zur Berechnung des Konvexradius R2:

$$d = (R2 - R1) \times \left(\frac{n}{n-1}\right)$$

$$R2 = R1 + \frac{d}{a} \qquad \text{mit } a = \left(\frac{n}{n+1}\right)$$

Wobei $n$ die Brechzahl des Linsenmaterials, $d$ die Mittendicke der Linse, $R1$ den Konkavradius und $R2$ den Konvexradius bezeichnet. Eine gemäss diesen Formeln berechnete afokalen Meniskuslinse weist im Wesentlichen keine abbildende Wirkung auf, ist also afokal. Eine derartige afokale Meniskuslinse weist zudem eine geringe Vergrösserung oder Verkleinerung der durchlaufenden Strahlung auf, genauer des Durchmessers des Strahlenbündels, ähnlich einem auf unendlich eingestellten Fernglas. Dieses führt beispielsweise zu einer vorteilhaften Abstandsänderung der beiden Messstrahlen, also der Strahlung vom Laser zum Umlenkelement und der vom Umlenkelement zum Detektor.

In einem weiteren Ausführungsbeispiel umfasst das Gasmessgerät ferner eine Gassonde, welche einen im Wesentlichen zylinderförmigen Sondenkörper mit mindestens einer Prozessöffnung umfasst, durch welche im Betrieb das Messmedium in das Innere des Sondenkörpers eindringen kann.

Die Ausgestaltung des Gasmessgeräts mit Gassonde ist insbesondere für Messungen im Inneren eines Behältnisses vorteilhaft, da so eine definierte Messstrecke im Inneren des Behältnisses ausgebildet werden kann.

Bevorzugt umfasst der Sondenkörper im Wesentlichen einen metallischen Werkstoff, wie beispielsweise einen Edelstahl, eine Nickellegierung, insbesondere eine Nickel-Molybdän-Legierung, Titan, Zirkon oder Tantal; oder einen Kunststoff, wie beispielsweise PEEK, PMMA oder POM; oder Mischungen daraus.

Die Gassonde kann als zweites Gehäuse ausgestaltet oder zwischen dem ersten und zweiten Gehäuse angeordnet sein, wobei jeweils ein Ende der Gassonde mit dem ersten Gehäuse und/oder mit dem zweiten Gehäuse verbunden ist.

Weiterhin kann die Gassonde mindestens einen Spülgasanschluss für ein Spülgas sowie eine Spülgasleitung umfassen. Der Einsatz eines Spülgases dient zur Verbesserung des Messergebnisses, da auf diese Weise die Gassonde ganz oder teilweise mit dem Spülgas gespült werden kann, so dass Ablagerungen und/oder unerwünschte Reste des Messmediums entfernt werden können und so für jede Messung vergleichbare Startbedingungen erzeugt werden können.

Vorzugsweise ist die Spülgasleitung derart in der Sonde angeordnet, dass im Betrieb das erste und/oder das zweite Prozessfenster mediumsseitig ein Spülgaspolster aufweisen. Auf diese Weise können Ablagerungen auf der Meniskuslinse stark reduziert werden, wodurch die Messgenauigkeit erhöht werden kann.

In einem weiteren Ausführungsbeispiel des Gasmessgeräts ist das optische Umlenkelement dichtungsfrei am vom ersten Gehäuse abgewandten Ende der Gassonde befestigt. Zudem umfasst die Spülgasleitung im Bereich des optischen Umlenkelements eine Austrittsöffnung, so dass das optische Umlenkelement im Betrieb vom Spülgas umspült wird.

Das erste Prozessfenster kann im ersten Gehäuse oder am dem ersten Gehäuse zugewandten Ende der Gassonde angeordnet sein. Das zweite Prozessfenster kann im zweiten Gehäuse oder am dem ersten Gehäuse abgewandten Ende der Gassonde angeordnet sein.

Weiterhin kann das Gasmessgerät mindestens einen Anschluss oder Flansch zum Anschluss des Gassmess-geräts an ein Behältnis umfassen. Der mindestens eine Anschluss oder Flansch kann je nach Ausgestaltung am ersten Gehäuse, am zweiten Gehäuse und/oder an einem und/oder beiden Enden der Gassonde angeordnet sein.

Das erfindungsgemässe Gasmessgerät kann insbesondere zur absorptions-spektroskopischen Bestimmung eines oder mehrerer der folgenden chemischen und/oder physikalischen Parameter herangezogen werden. Diese Parameter umfassen unter anderem die Temperatur oder den Druck des Messmediums und/oder die Konzentration eines Gases, wie beispielsweise Sauerstoff, Kohlendioxid, Kohlenmonoxid, Stickoxide, Amine, Ammoniak, Halogenwasserstoffe, Schwefelwasserstoffe, Schwefeloxide, Wasser oder Mischungen daraus.

Weiterhin kann das Gasmessgerät eine Steuer- und/oder Regeleinheit umfassen, welche zumindest teilweise im ersten und/oder zweiten Gehäuse angeordnet ist. Es ist auch möglich, dass die Steuer- und/der Regeleinheit im Wesentlichen als separates Gerät ausgestaltet ist, welches drahtlos oder drahtgebunden mit dem Gassmessgerät ver-bunden ist.

Als Laser umfasst das Gassmessgerät vorzugsweise einen durchstimmbaren Diodenlaser. Zur Sauerstoff-Bestimmung kann beispielsweise ein Laser oder Diodenlaser eingesetzt werden, welcher in einem Wellenlängenbereich von ca. 700 bis ca. 800 nm emittiert und/oder durchstimmbar ist, wobei der Wellenlängenbereich des Lasers zumindest eine der bekannten Sauerstoff-Absorptionsbanden umfasst.

Verschiedene Ausführungsbeispiele eines erfindungsgemässen Gasmessgeräts werden anhand der folgenden Figuren näher beschrieben, wobei gleiche Elemente mit gleichen Bezugszeichen versehen sind. Die

Figuren zeigen:

Fig. 1   Ein erstes Ausführungsbeispiel eines erfindungsgemässen Gasmessgeräts mit einem ersten Prozessfenster und einer Gassonde und angeschlossener Steuer- und/oder Regeleinheit;

Fig. 2   ein zweites Ausführungsbeispiel eines erfindungsgemässen Gasmessgeräts mit einem ersten und einem zweiten Prozessfenster und einer Gassonde, welche zwischen einem ersten und einem zweiten Gehäuse angeordnet ist, wobei im zweiten Gehäuse ein optisches Umlenkelement angeordnet ist;

Fig. 3   ein drittes Ausführungsbeispiel eines erfindungsgemässen Gasmessgeräts mit einem ersten und einem zweiten Prozessfenster und einer Gassonde, welche zwischen einem ersten und einem zweiten Gehäuse angeordnet ist, wobei im zweiten Gehäuse ein Detektor angeordnet ist;

Fig. 4   ein viertes Ausführungsbeispiel eines erfindungsgemässen Gasmessgeräts mit einem ersten und einem zweiten Prozessfenster und einem ersten und einem zweiten Gehäuse, wobei im ersten Gehäuse ein Laser und im zweiten Gehäuse ein Detektor angeordnet ist;

Fig. 5   eine Schnittzeichnung eines erfindungsgemässen Gasmessgeräts mit einem ersten Prozessfenster und einer Gassonde, einem optischen Umlenkelement und einer Spülgasleitung.

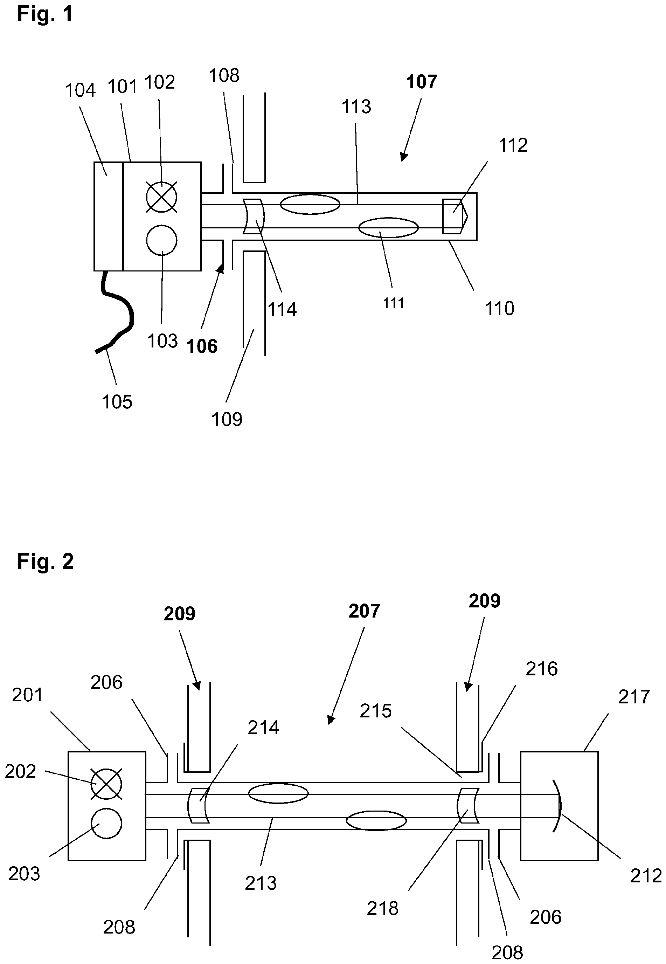

Figur 1 zeigt eine stark schematisierte Darstellung eines erfindungsgemässen Gasmessgeräts. Das Gasmessgerät umfasst ein erstes Gehäuse 101, in welchem ein Laser 102 als Strahlungsquelle und ein Detektor 103 angeordnet sind. Das erste Gehäuse 101 kann hier im Wesentlichen einem Spektrometer entsprechen und als Laser 102 einen durchstimmbaren Diodenlaser aufweisen, wie es für TDLAS eingesetzt wird und beispielsweise in der DE 20 2008 013 557 U1 offenbart ist. Das Gehäuse 101 ist mit einer hier nur angedeuteten Steuer- und/oder Regeleinheit 104 verbunden, welche wiederum über eine geeignete drahtlose oder wie hier gezeigt drahtgebunden Verbindung 105 mit einer übergeordneten Steueranlage, wie beispielsweise einer Prozessleitstelle verbunden sein kann.

Die Steuer- und/oder Regeleinheit 104 kann wie hier gezeigt an das Gehäuse 101 angeschlossen sein, sie kann jedoch auch teilweise im Gehäuse 101 angeordnet sein und mit diesem nur drahtlos oder drahtgebunden verbunden sein. Die Steuer- und/oder Regeleinheit 104 dient insbesondere dazu Steuerbefehle und/oder vorgegebene Parameter an das Gasmessgerät zu senden, den Laser 102 zu steuern sowie auch dazu die vom Detektor 103 aufgenommenen Daten und/oder Rohdaten zu erfassen und an eine geeignete Auswerteeinheit weiterzuleiten.

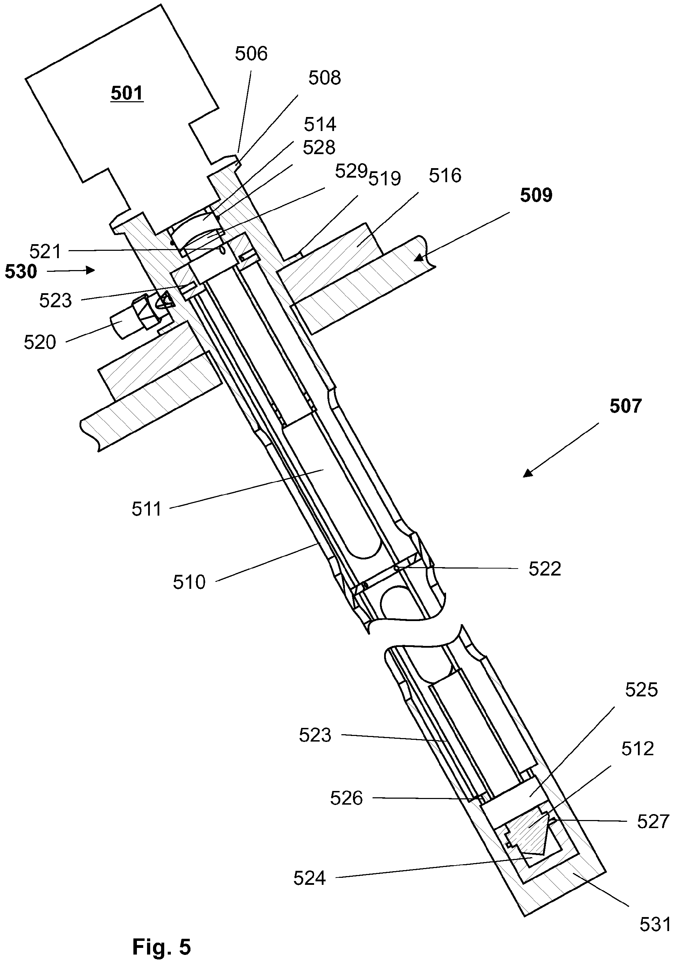

Weiterhin weist das Gehäuse 101 einen ersten Flansch 106 zum Anschluss an einen Gegenflansch 108 einer Gassonde 107 auf. Das Gasmessgerät kann, wie hier dargestellt über den Flansch 106 und den Gegenflansch 108 an einem Behältnis 109, dessen Wand hier angedeutet ist, angeschlossen werden. Vorzugsweise weist das Behältnis 109 dazu einen weiteren Flansch auf, wie es in Figur 2 gezeigt ist. Das Gasmessgerät kann auch, wie in Figur 5 gezeigt einen weiteren Flansch aufweisen, welcher zum Anschluss an das Behältnis 109 geeignet ist. Für Prozessanlagen sind verschiedene Flanschsysteme und -typen bekannt und werden hier daher nicht näher erläutert.

Die Gassonde 107 umfasst einen im Wesentlichen zylinderförmigen Sondenkörper 110, welcher über ein oder mehrere Prozessöffnungen 111 verfügt, über die ein Messmedium in die Gassonde eindringen kann oder diese durchströmen kann. Die Prozessöffnungen 111 können wir hier gezeigt versetzt oder entlang einer gemeinsamen Achse angeordnet sein, desweiteren ist es vorteilhaft, wenn eine Gassonde 107 mehrere einander gegenüberliegende Prozessöffnungen 111 aufweist, so dass das gasförmige Messmedium möglichst ungehindert durch den Sondenkörper 110 strömen kann.

Im dem Gehäuse 101 gegenüberliegenden Ende der Gassonde 107 befindet sich ein optisches Umlenkelement 112, welches dazu dient die vom Laser 102 ausgesandte Strahlung, wie in dem hier nur angedeuteten Strahlengang 113, zum Gehäuse 101 und insbesondere zum darin angeordneten Detektor 103 zurückzulenken. Auf diese Weise passiert die Strahlung auf dem Weg zwischen Laser 102 und Detektor 103 zweimal die Messstrecke im Messmedium. Als optisches Umlenkelement 112 können neben dem hier gezeigten Tripelprisma auch andere Elemente eingesetzt werden, wie beispielsweise mindestens eine Katzenaugenoptik, ein planarer oder abbildender Spiegel oder ein Tripelpspiegel.

Als Prozessfenster 114 ist eine afokale Meniskuslinse in der Gassonde 107 angeordnet. In Figur 1 ist konvexe Oberfläche der Meniskuslinse vom Messmedium zugewandt. Wie bereits erwähnt kann eine afokale Meniskuslinse auch umgekehrt, also mit vom Messmedium abgewandter konvexer Oberfläche eingesetzt werden.

Das Prozessfenster 114 ist gegen den Sondenkörper 110 mittels eines geeigneten Dichtmittels, beispielsweise einem O-Ring, abgedichtet. Es ist sehr vorteilhaft das Prozessfenster 114 in der Gassonde 107 anzuordnen, da so die Gassonde 107 gegen aussen abgeschlossen ist und kein weiteres Fenster zur Trennung zwischen Behältnis 109 und der Umgebung benötigt wird. Zudem kann so das Gehäuse 101, welches im Wesentlichen das Spektrometer umfasst, einfach abgebaut und beispielsweise unter kontrollierten Bedingungen justiert und/oder kalibriert werden. Zudem ist es so möglich, das Spektrometer auszutauschen, so dass beispielsweise im selben Behältnis oder derselben Messumgebung Messungen mit unterschiedlichem Laserwellenlängenbereichen durchgeführt werden können.

Figur 2 zeigt eine stark schematisierte Darstellung eines zweiten Ausführungsbeispiels des erfindungsgemässen Gasmessgeräts. Wie hier gezeigt ist das Gasmessgerät in eine Rohrleitung oder ein vergleichbares Behältnis 209 eingebaut. In der Wand des Behältnisses 209 befinden sich einander gegenüberliegende Durchführungen 215 zur Aufnahme des Gasmessgeräts, welche aussen jeweils einen Flanschstutzen 216 aufweisen.

Das Gasmessgerät umfasst ein erstes Gehäuse 201, in welchem ein Laser 202 und ein Detektor 203 angeordnet sind, und ein dem ersten Gehäuse 201 gegenüberliegendes Gehäuse 217, in welchem ein optisches Umlenkelement 212, hier ein Spiegel, angeordnet ist. Beide Gehäuse 201, 217 weisen einen Flansch 206 auf, mit welchen das jeweilige Gehäuse an eine Gassonde 207 und/oder am Behältnis 209 befestigt werden kann.

Die Gassonde 207 weist mehrere Prozessöffnungen 211 auf, sowie ein erstes und ein zweites Prozessfenster 214, 218, welche jeweils an einem Ende der Gassonde im Strahlengang 213 angeordnet sind. Beide Prozessfenster 214, 218 sind als afokale Meniskuslinsen ausgestaltet. Das erste Prozessfenster 214 ist so im Strahlengang platziert, dass die konkave Oberfläche der afokalen Meniskuslinse dem Messmedium zugewandt ist, und das zweite Prozessfenster 218 ist so platziert, dass die konvexe Oberfläche der afokalen Meniskuslinse dem Messmedium zugewandt ist. Die beiden Prozessfenster 214, 218 schliessen wiederum die Gassonde und damit das Behältnis 209, genauer die Durchführungen 215 nach aussen ab, so dass eines oder auch beide Gehäuse 201, 212 entfernt werden können, ohne dass das Messmedium aus dem Behältnis 209 in die Umgebung austritt.

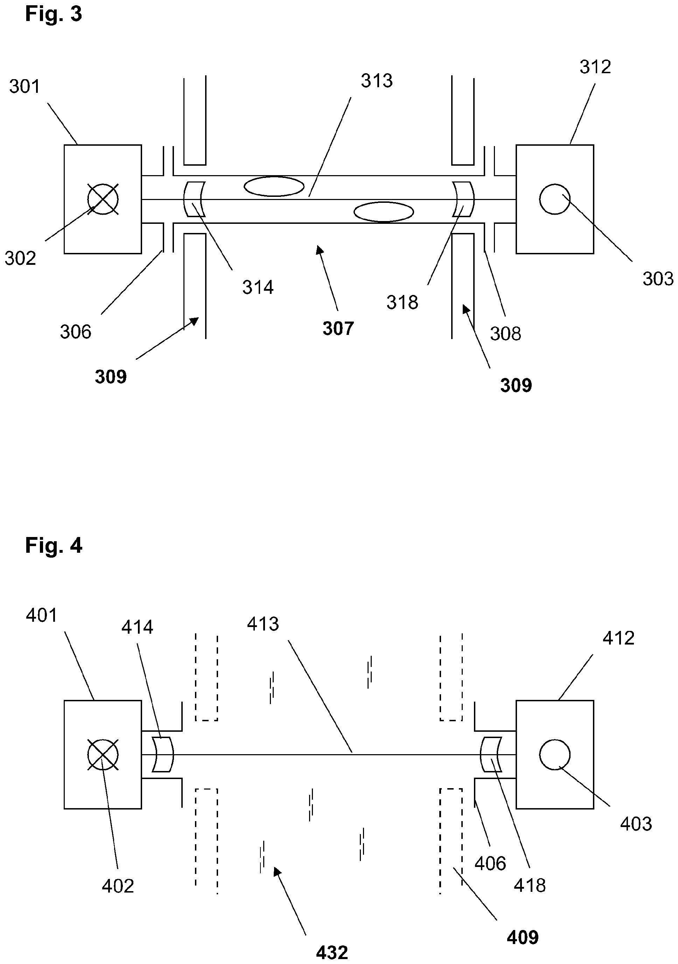

Figur 3 zeigt eine stark schematisierte Darstellung einer dritten Ausführung des Gasmessgeräts. Im Gegensatz zu den in den Figuren 1 und 2 gezeigten Gasmessgeräten, ist hier ein Laser 302 in einem ersten Gehäuse 301 und ein Detektor 303 in einem zweiten Gehäuse 312 angeordnet. Die beiden Gehäuse 312 sind wiederum über geeignete Flansche mit einer Gassonde 307 und/oder einem Behältnis 309, beispielsweise einer Rohrleitung verbunden. Die Gassonde 307 entspricht im Wesentlichen der bereits in Figur 2 gezeigten, wobei sowohl das erste als auch das zweite Prozessfenster 314, 318 als afokale Meniskuslinse ausgestaltet, deren konkave Oberflächen hier zum Messmedium ausgerichtet sind. Aufgrund der räumlichen Trennung von Laser 302 und Detektor 303 passiert die Strahlung des Lasers 302 nur einmal das Messmedium, wie durch den Strahlengang 313 angedeutet.

Figur 4 zeigt eine stark schematisierte Darstellung einer vierten Ausführung eines erfindungsgemässen Gasmessgeräts. Wie bereits in Figur 3 gezeigt, umfasst das Gasmessgerät einen Laser 402, welcher in einem ersten Gehäuse 401 angeordnet ist, und einen Detektor 403, welcher in einem zweiten Gehäuse 412 angeordnet ist. Die beiden Gehäuse 401, 412 sind einander gegenüberliegend angeordnet und können, wie hier nur angedeutet an einem Behältnis 409, beispielsweise einer Zu- oder Ableitung, befestigt sein. Es wäre auch möglich, dass diese Anordnung als sogenannte Open-Path-Anordnung zur Analyse einer Messumgebung ausserhalb eines Behältnisses verwendet wird. Im Gegensatz zu den in den Figuren 1 bis 3 gezeigten Ausführungen weisst die vierte Ausführung keine Gassonde auf. In jedem Gehäuse 401, 412 ist ein Prozessfenster 414, 418 angeordnet, welches als afokale Meniskuslinse ausgebildet ist, deren konvexe Oberfläche hier dem Messmedium 432 zugewandt ist. Der Strahlengang 413 verläuft hier direkt durch die das Messmedium 432 enthaltende Messumgebung bzw. durch das Behältnis 409.

Figur 5 zeigt eine Schnittzeichnung eines erfindungsgemässen Gasmessgeräts. Das Gasmessgerät umfasst ein erstes Gehäuse 501 mit einem Laser und einem Detektor. Das erste Gehäuse 501 ist mittels eines Flansches 506 lösbar an einem Gegenflansch 508 einer Gassonde 507 befestigt.

Die Gassonde 507 umfasst einen Flanschkörper 530, welcher mit einem zylinderförmigen Sondenkörper 510 verbunden ist. Im Flanschkörper 530 ist als Prozessfenster 521 eine afokale Meniskuslinse so angerordnet, dass ihre konkave Oberfläche dem Messmedium zugewandt ist. Das Prozessfenster 521 ist durch eine Dichtung 528, hier ein O-Ring, dichtend in den Flanschkörper 530 eingepasst, so dass auch ohne Gehäuse 101 kein Messmedium aus dem Behältnis 509 durch die Gassonde 507 austreten kann.

Im Sondenkörper 510 sind mehrere Prozessöffnungen 511 ausgebildet, so dass ein gasförmiges Messmedium durch den Sondenkörper 510 strömen kann. Der Flanschkörper 530 umfasst einen weiteren Flansch 519, über welchen die Gassonde 507 mit einem Flansch 516 in der Wand eines Behältnisses 509 verbunden ist.

Die Gassonde 507 endet in einem Zapfen 531, in welchem ein optisches Umlenkelement 512 dichtungsfrei in der Aufhängung 527 aufgehängt ist. Das optische Umlenkelement 512 ist hier als Tripelprisma ausgestaltet.

Weiterhin befindet sich am Flanschkörper 530 ein Gaseinlass 520 für ein Spülgas. Das Spülgas kann über eine parallel zur Längsachse des Sondenkörpers verlaufende Spülgasleitung 523 im Sondenkörper 510 so verteilt werden, dass sich im Betrieb zumindest im Bereich 529 vor dem Prozessfenster 514 ein Spülgaspolster ausbilden kann. Ebenso kann das optische Umlenkelement 512 von dem Spülgas umspült werden, so dass die Bereiche 524 und 525 im Betrieb ebenfalls ein Spülgaspolster aufweisen. Dazu wird das Spülgas vom Gasanschluss über die Spülgasleitung 523 durch den Sondenkörper 510 geleitet und tritt durch die Öffnungen 521, 522 und 526 an verschiedenen Stellen im Sondenkörper 510 aus der Spülgasleitung 523 aus. Die Öffnung 521 befindet sich im Flanschkörper, die Öffnungen 522 zwischen dem Flanschkörper 530 und dem Zapfen 531 und die Öffnungen 526 befinden sich in der Nähe des optischen Umlenkelements 512. Die in Figur 5 gezeigte Ausgestaltung der Gassonde mit Spülgasanschluss und Spülgasleitung kann selbstverständlich auch in den zuvor gezeigten Gasmessgeräten mit Gassonde realisiert werden.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise indem die Merkmale der einzelnen Ausführungsbeispiele miteinander kombiniert und/oder einzelne Funktionseinheiten der Ausführungsbeispiele ausgetauscht werden. Insbesondere können die in den Figuren beispielhaft gezeigten Anordnungen mit unterschiedlichen Umlenkelementen sowie mit oder ohne Gassonde realisiert werden.

**Liste der Bezugszeichen**

| | |
|---|---|
| 101, 201, 301, 401, 501 | Erstes Gehäuse |
| 102, 202, 302, 402 | Laser |
| 103, 203, 303, 403 | Detektor |
| 104 | Steuer- und/oder Regeleinheit |
| 105 | Verbindung |
| 106, 206, 306, 506 | Flansch |
| 107, 207, 307, 507 | Gassonde |
| 108, 208, 308, 508 | Flansch |
| 109, 209, 309, 409, 509 | Behältnis / Behältniswand |
| 110, 210, 310, 510 | Sondenkörper |
| 111, 211, 311, 511 | Prozessöffnung |
| 112, 212, 512 | Optisches Umlenkelement |
| 113, 213, 313, 413, 513 | Strahlengang |
| 114, 214, 314, 414, 514 | Erstes Prozessfenster |
| 215 | Durchführung |
| 216 | Flansch |
| 217, 317, 417 | Zweites Gehäuse |
| 218, 318, 418 | Zweites Prozessfenster |
| 519 | Flansch |
| 520 | Gasanschluss |
| 521 | Öffnung |
| 522 | Öffnung |
| 523 | Spülgasleitung |
| 524 | Bereich |
| 525 | Bereich |
| 526 | Öffnung |
| 527 | Halterung |
| 528 | Dichtung |
| 529 | Bereich |
| 530 | Flanschkörper |
| 531 | Zapfen |
| 432 | Messmedium |

**Patentansprüche**

1.  Gasmessgerät zur absorptions-spektroskopischen in-situ Bestimmung mindestens eines chemischen und/oder physikalischen Parameters eines gasförmigen Messmediums (432), wobei das Gasmessgerät ein erstes Gehäuse (101, 201, 301, 401, 501); mindestens einen Laser (102, 202, 302, 402) als Strahlungsquelle, welcher im ersten Gehäuse (101, 201, 301, 401, 501) angeordnet ist; mindestens ein erstes Prozessfenster (114, 214, 314, 414, 514), welches zum Einkoppeln der vom Laser (102, 202, 302, 402) ausgesandten Strahlung in ein Messmedium (432) dient; und mindestens einen Detektor (103, 203, 303, 403), mit welchem die Strahlung nach Wechselwirkung mit dem Messmedium (432) detektiert wird, umfasst; **dadurch gekennzeichnet, dass** das erste Prozessfenster (114, 214, 314, 414, 514) als afokale Meniskuslinse ausgestaltet ist, welche eine konvexe Oberfläche und eine konkave Oberfläche aufweist.

**2.** Gasmessgerät gemäß Anspruch 1, **dadurch gekennzeichnet, dass** dieses ferner ein optisches Umlenkelement (112, 212, 512) umfasst, welches die in das Messmedium eingekoppelte Strahlung zum ersten Prozessfenster (114, 214, 514) zurücklenkt.

**3.** Gasmessgerät gemäß Anspruch 2, **dadurch gekennzeichnet, dass** das optische Umlenkelement (112, 212, 512) mindestens eine Katzenaugenoptik, mindestens ein Tripelprisma, mindestens einen Tripelspiegel, mindestens einen planaren oder abbildenden Spiegel umfasst.

**4.** Gasmessgerät gemäß einem der Ansprüche 1 oder 2, **dadurch gekennzeichnet, dass** der Detektor (103, 203) und der Laser (102, 202) im ersten Gehäuse (101, 201, 501) angeordnet sind und dass das erste Prozessfenster (114, 214, 514) zum Einkoppeln der vom Laser (102, 202) ausgesandten Strahlung in das Messmedium sowie nach Wechselwirkung mit dem Messmedium auch zum Auskoppeln der Strahlung aus dem Messmedium dient.

**5.** Gasmessgerät gemäß einem der Ansprüche 1 oder 2, **dadurch gekennzeichnet, dass** dieses ferner ein zweites Gehäuse (217, 317, 417) und ein zweites Prozessfenster (218, 318, 418) umfasst, wobei der Detektor (303, 403) oder das optische Umlenkelement (212) im zweiten Gehäuse angeordnet ist.

**6.** Gasmessgerät gemäß Anspruch 5, **dadurch gekennzeichnet, dass** das zweite Prozessfenster (218, 318, 418) als afokale Meniskuslinse ausgebildet ist, welche eine konvexe und eine konkave Oberfläche aufweist.

**7.** Gasmessgerät nach einem der Ansprüche 1 bis 6, **dadurch gekennzeichnet, dass** dieses ferner eine Gassonde (107, 207, 307, 507) umfasst, welche einen im Wesentlichen zylinderförmigen Sondenkörper (110, 210, 310, 510) mit mindestens einer Prozessöffnung (111, 211, 311, 511) umfasst, durch welche im Betrieb das Messmedium in das Innere des Sondenkörpers (110, 210, 310, 510) eindringen kann, wobei ein Ende der Gassonde (107, 207, 307, 507) im Betrieb mit dem ersten Gehäuse (101, 201, 301, 501) verbunden ist.

**8.** Gasmessgerät gemäß Anspruch 7, **dadurch gekennzeichnet, dass** die Gassonde einen Spülgasanschluss (520) für ein Spülgas und mindestens eine Spülgasleitung (523) umfasst.

**9.** Gasmessgerät gemäß Anspruch 8, **dadurch gekennzeichnet, dass** die Spülgasleitung (523) derart in der Gassonde angebracht ist, dass im Betrieb das erste Prozessfenster (514) und/oder das zweite Prozessfenster mediumsseitig ein Spülgaspolster aufweisen.

**10.** Gasmessgerät gemäß einem der Ansprüche 7 bis 9, **dadurch gekennzeichnet, dass** das optische Umlenkelement (512) dichtungsfrei befestigt ist und im Betrieb vom Spülgas umspült wird.

**11.** Gasmessgerät gemäß einem der Ansprüche 1 bis 10, **dadurch gekennzeichnet, dass** der Laser (102, 202, 302, 402) durchstimmbar ist.

**12.** Gasmessgerät gemäß einem der Ansprüche 1 bis 11, **dadurch gekennzeichnet, dass** der zu bestimmende chemische und/oder physikalische Parameter mindestens einen der folgenden Parameter umfasst: Temperatur, Druck und/oder die Konzentration mindestens eines Gases, wie Sauerstoff, Kohlendioxid, Kohlenmonoxid, Stickoxide, Ammoniak, Amine, Halogenwasserstoffe, Schwefelwasserstoffe, Schwefeldioxid, Wasser oder Mischungen daraus.

**Claims**

**1.** A gas measuring device for the absorption-spectroscopic in-situ determination of at least one chemical and/or physical parameter of a gaseous measuring medium (432), wherein the gas measuring device comprises a first housing (101, 201, 301, 401, 501); at least one laser (102, 202, 302, 402) as a radiation source which is arranged in the first housing (101, 201, 301, 401, 501), at least one first process window (114, 214, 314, 414, 514) which serves to couple the radiation sent out by the laser (102, 202, 302, 402) into a measuring medium (432); and at least one detector (103, 203, 303, 403) with which the radiation is detected after interaction with the measuring medium (432); **characterised in that** the first process window (114, 214, 314, 414, 514) is formed as an afocal meniscus lens which has a convex surface and a concave surface.

**2.** The gas measuring device according to claim 1, **characterised in that** it further comprises an optical deflection element (112, 212, 512) which directs the radiation coupled into the measuring medium back to the first process window (114, 214, 514).

3. The gas measuring device according to claim 2, **characterised in that** the optical deflection element (112, 212, 512) comprises at least one cat eye optics, at least one triple prism, at least one triple mirror, at least one planar or imaging mirror.

4. The gas measuring device according to one of claims 1 or 2, **characterised in that** the detector (103, 203) and the laser (102, 202) are arranged in the first housing (101, 201, 501) and **in that** the first process window (114, 214, 514) serves to couple the radiation sent out by the laser (102, 202) into the measuring medium and, after interaction with the measuring medium, also to decouple the radiation from the measuring medium.

5. The gas measuring device according to one of claims 1 or 2, **characterised in that** it further comprises a second housing (217, 317, 417) and a second process window (218, 318, 418), wherein the detector (303, 403) and the optical deflection element (212) are arranged in the second housing.

6. The gas measuring device according to claim 5, **characterised in that** the second process window (218, 318, 418) is formed as an afocal meniscus lens which has a convex and a concave surface.

7. The gas measuring device according to one of claims 1 to 6, **characterised in that** it further comprises a gas probe (107, 207, 307, 507) which comprises a substantially cylindrical probe body (110, 210, 310, 510) with at least one process opening (111, 211, 311, 511) through which, in operation, the measuring medium can enter the interior of the probe body (110, 210, 310, 510), wherein an end of the gas probe (107, 207, 307, 507), in operation, is connected to the first housing (101, 201, 301, 501).

8. The gas measuring device according to claim 7, **characterised in that** the gas probe comprises a purge gas connection (520) for a purge gas and at least one purge gas line (523).

9. The gas measuring device according to claim 8, **characterised in that** the purge gas line (523) is attached in the gas probe such that, in operation, the first process window (514) and/or the second process window have a purge gas cushion on the medium side.

10. The gas measuring device according to one of claims 7 to 9, **characterised in that** the optical deflection element (512) is fixed without seal and, in operation, the purge gas flows around it.

11. The gas measuring device according to one of claims 1 to 10, **characterised in that** the laser (102, 202, 302, 402) is tunable.

12. The gas measuring device according to one of claims 1 to 11, **characterised in that** chemical and/or physical parameter the to be determined comprises at least one of the following parameters: temperature, pressure and/or the concentration of at least one gas, such as oxygen, carbon dioxide, carbon monoxide, nitrogen oxides, ammonia, amines, hydrogen halides, hydrogen sulphides, sulphur dioxide, water or mixtures thereof.

**Revendications**

1. Appareil de mesure pour un gaz pour la détermination in situ par spectroscopie d'absorption d'au moins un paramètre chimique et/ou physique d'un milieu de mesure gazeux (432), dans lequel l'appareil de mesure pour un gaz comprend un premier boîtier (101, 201, 301, 401, 501) ; au moins un laser (102, 202, 302, 402) sous forme de source de rayonnement, lequel est agencé dans le premier boîtier (101, 201, 301, 401, 501) ; au moins une première fenêtre de traitement (114, 214, 314, 414, 514), laquelle sert au couplage du rayonnement émis par le laser (102, 202, 302, 402) dans un milieu de mesure (432) ; et au moins un détecteur (103, 203, 303, 403), avec lequel le rayonnement est détecté après interaction avec le milieu de mesure (432) ; **caractérisé en ce que** la première fenêtre de traitement (114, 214, 314, 414, 514) est configurée sous forme de lentille ménisque afocale, laquelle présente une surface convexe et une surface concave.

2. Appareil de mesure pour un gaz selon la revendication 1, **caractérisé en ce que** celui-ci comprend en outre un élément de renvoi optique (112, 212, 512), lequel renvoie le rayonnement couplé dans le milieu de mesure vers la première fenêtre de traitement (114, 214, 514).

**3.** Appareil de mesure pour un gaz selon la revendication 2, **caractérisé en ce que** l'élément de renvoi optique (112, 212, 512) comprend au moins une optique en oeil-de-chat, au moins un prisme triple, au moins un miroir triple, au moins un miroir plan ou d'imagerie.

**4.** Appareil de mesure pour un gaz selon l'une quelconque des revendications 1 ou 2, **caractérisé en ce que** le détecteur (103, 203) et le laser (102, 202) sont agencés dans le premier boîtier (101, 201, 501) et **en ce que** la première fenêtre de traitement (114, 214, 514) sert au couplage du rayonnement émis par le laser (102, 202) dans le milieu de mesure ainsi qu'après interaction avec le milieu de mesure également au découplage du rayonnement du milieu de mesure.

**5.** Appareil de mesure pour un gaz selon l'une quelconque des revendications 1 ou 2, **caractérisé en ce que** celui-ci comprend en outre un deuxième boîtier (217, 317, 417) et une deuxième fenêtre de traitement (218, 318, 418), dans lequel le détecteur (303, 403) ou l'élément de renvoi optique (212) est agencé dans le deuxième boîtier.

**6.** Appareil de mesure pour un gaz selon la revendication 5, **caractérisé en ce que** la deuxième fenêtre de traitement (218, 318, 418) est réalisée sous forme de lentille ménisque afocale, laquelle présente une surface convexe et une surface concave.

**7.** Appareil de mesure pour un gaz selon l'une quelconque des revendications 1 à 6, **caractérisé en ce que** celui-ci comprend en outre une sonde de gaz (107, 207, 307, 507), laquelle comprend un corps de sonde (110, 210, 310, 510) sensiblement cylindrique avec au moins une ouverture de traitement (111, 211, 311, 511), à travers laquelle en fonctionnement le milieu de mesure peut pénétrer à l'intérieur du corps de sonde (110, 210, 310, 510), dans lequel une extrémité de la sonde de gaz (107, 207, 307, 507) est reliée en fonctionnement au premier boîtier (101, 201, 301, 501).

**8.** Appareil de mesure pour un gaz selon la revendication 7, **caractérisé en ce que** la sonde de gaz comprend un raccord de gaz de rinçage (520) pour un gaz de rinçage et au moins une conduite de gaz de rinçage (523).

**9.** Appareil de mesure pour un gaz selon la revendication 8, **caractérisé en ce que** la conduite de gaz de rinçage (523) est montée dans la sonde de gaz de telle sorte qu'en fonctionnement la première fenêtre de traitement (514) et/ou la deuxième fenêtre de traitement présentent côté milieu un coussin de gaz de rinçage.

**10.** Appareil de mesure pour un gaz selon l'une quelconque des revendications 7 à 9, **caractérisé en ce que** l'élément de renvoi optique (512) est fixé sans joint et est baigné en fonctionnement par le gaz de rinçage.

**11.** Appareil de mesure pour un gaz selon l'une quelconque des revendications 1 à 10, **caractérisé en ce que** le laser (102, 202, 302, 402) est accordable.

**12.** Appareil de mesure pour un gaz selon l'une quelconque des revendications 1 à 11, **caractérisé en ce que** le paramètre chimique et/ou physique à déterminer comprend au moins un des paramètres suivants : température, pression et/ou la concentration d'au moins un gaz tel que oxygène, dioxyde de carbone, monoxyde de carbone, azotes, ammoniac, aminés, halogénures d'hydrogène, sulfures d'hydrogène, dioxyde de soufre, eau ou des mélanges de ceux-ci.

**Fig. 1**

**Fig. 2**

**Fig. 3**

301

313

312

302

306

314

318

303

**309**

307

**309**

308

**Fig. 4**

401

414

413

412

402

403

406

418

**432**

**409**

**Fig. 5**

# EP 2 791 652 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5331409 A
- US 5963336 A
- EP 0068037 A1
- DE 202008013557 U1